# EUROPEAN PATENT SPECIFICATION

(11) **EP 1 722 942 B1**
(45) Date of publication and mention of the grant of the patent: **22.04.2009**
(21) Application number: 05724915.3
(22) Date of filing: 08.03.2005
(51) Int. Cl.: B26B 21/24, B65D 83/10

(54) **DISPENSERS FOR RAZOR BLADE CARTRIDGES**
SPENDER FÜR RASIERKLINGENEINHEITEN
DISTRIBUTEURS POUR TETES DE LAMES DE RASOIR

(30) Priority: 11.03.2004 US 798140
(43) Date of publication of application: 22.11.2006
(73) Proprietor: The Gillette Company, Boston, Massachusetts 02199 (US)
(72) Inventor: APPRILLE, Domenic, V., North Reading, MA 01864 (US)
(74) Representative: Chandrani, Vandita
(86) International application number: PCT/US2005/007477
(87) International publication number: WO 2005/090020

(56) References cited:
- US-A- 5 636 442
- US-A1- 2002 184 770
- US-B1- 6 237 232

## Description

The invention relates to dispensing razor blade cartridges from a dispenser onto a handle.

Razor blade cartridges are typically removed from a dispenser by connecting the handle to the cartridge while the cartridge is still retained in the dispenser. The user then moves the handle with respect to the dispenser, using the leverage of the handle against a friction or interference fit of a projection that holds the cartridge body, and frees the cartridge from the dispenser. A device of this type is known from US 6,237,232 B1.

In one aspect, the invention features, in general, a dispenser for razor blade cartridges used with a handle. The dispenser has a housing structure that defines sections for receiving respective cartridges and retaining the cartridges in predetermined positions that permit connection of a handle connecting structure on the handle to one of the cartridges as the handle is moved toward the cartridge. The dispenser also has a latch for each section. Each latch is shaped and positioned to interact with a corresponding feature on the blade unit of the cartridge.

In a first aspect, the invention features a dispenser for razor blade cartridges, each cartridge including a blade unit and a cartridge connecting portion for connecting the cartridge to a handle. The dispenser includes a housing structure including a base and angled cartridge dividers that define sections for receiving respective cartridges and retaining the cartridges in predetermined positions that permit connection of a handle connecting structure on the handle to one of the cartridges as the handle is moved toward the cartridge. Each section includes a latch shaped and positioned to interact with a corresponding resilient feature on the blade unit of the cartridge, the latch being sufficiently rigid to resist movement during removal of a cartridge from the dispenser.

In a second aspect, the invention features a combination including: (a) a cartridge dispenser including a housing structure that includes a base and dividers that define sections for receiving respective cartridges and retaining the cartridges in predetermined positions, each section comprising a latch that releasably holds a respective cartridge in a latched position within the section; and (b) a replaceable razor blade cartridge comprising a blade unit and a cartridge connecting structure for connecting the blade unit to a handle by movement of the handle toward the cartridge connecting structure, the blade unit including an elongated housing having a resilient latching portion for engagement by the latch on the cartridge dispenser.

Some implementations may include one or more of the following features.

Each section includes a pair of latches. The latches are positioned on inner surfaces of opposed side walls of the housing. Each latch includes a latch protrusion shaped to interact with a corresponding protrusion on the blade unit. The latch protrusion is positioned to retain the blade unit within the section by an interference fit with the blade unit protrusion. The latch protrusion includes an elongated ridge. The latch protrusion includes a notch. The latch protrusion includes a first surface positioned to inhibit vertical movement of the protrusion on the blade unit and a second surface positioned to inhibit horizontal movement of the protrusion on the blade unit. The ridge includes an elongated angled surface configured to facilitate insertion of a blade unit into the respective section. Each of the ridges extends vertically along, and is attached to, an inner side wall of the dispenser. The resilient latching portion includes an elastomer. The resilient latching portion further includes a raised portion of the housing structure underlying the elastomer.

The cartridge dividers include blade unit dividers that extend from the base, are generally perpendicular to the base, and define blade unit regions in which the blade units are received. The cartridge dividers further include angled dividers that extend from the ends of respective blade unit dividers at acute angles with the base and define angled regions through which the blade units pass during delivery to and removal from the blade unit regions and in which the cartridge connecting structure is received. An angled region of one section partially overlies a blade unit region of an adjacent section. The dispenser has drainage holes associated with respective sections.

The dispenser further includes raised members on which end structures of the cartridge are supported so as to avoid contact of the blades with the dispenser. Each of the raised members has a concave upper edge. An upper portion of the concave upper edge of each raised member is adjacent a lower portion of a convex surface of a corresponding one of the cartridge dividers.

The dispenser further includes a stabilizing feature, disposed on an upper edge of at least some of the cartridge dividers, constructed to engage the cartridge connecting portion and restrict movement of the cartridge connecting portion within an upper opening of the corresponding section. The dispenser further includes a feature, disposed on the upper edge, constructed to prevent contact between the stabilizing feature and a rear edge of the cartridge. The rear edge may include a trimming blade assembly. The upper edge is radiused to prevent contact between the stabilizing feature and the rear edge of the cartridge.

In another aspect, the invention features a method of using a replaceable razor cartridge including (a) storing a cartridge in a dispenser comprising a housing structure including a base and angled cartridge dividers that defme sections for receiving respective cartridges and retaining the cartridges in predetermined positions, each section comprising a latch shaped and positioned to interact with a corresponding resilient feature on the blade unit of the cartridge, each latch being sufficiently rigid to resist movement during removal of a cartridge from the dispenser; (b) moving a handle connecting structure of a handle toward cartridge connecting structure of the cartridge to connect the cartridge to the handle; and (c) removing the cartridge from the dispenser while connected to the handle by retracting the handle from the dispenser.

The method may further include, after use of the razor, replacing the cartridge in the same or a different dispenser by moving the handle and connected cartridge into the dispenser, disconnecting the cartridge from the handle, and retracting the handle while the cartridge remains in the dispenser.

The invention also features a method of connecting such a replaceable razor cartridge to a handle in a proper orientation, the cartridge including a blade unit and a cartridge connecting structure for connecting the cartridge to the handle, the method including (a) storing the cartridge in an angled region of a dispenser between a fi ont angled divider and a rear angled divider that are generally parallel to each other, and (b) moving a handle connecting structure of a handle toward the cartridge connecting structure of the cartridge to connect the cartridge to the handle. The handle connecting structure and cartridge connecting structure include corresponding asymmetrical features that will interfere with each other when the handle is in an improper orientation, and mate when the handle is in a proper orientation.

In yet a further aspect, the invention features a method of making such a dispenser for razor blade cartridges, including permanently connecting a bottom plastic part and a top plastic part that together define sections for receiving respective razor blade cartridges, the bottom part and/or top part including features configured to inhibit relative movement of the bottom and top part during and after the connecting step.

Embodiments of the invention may have one or more of the following advantages. Handles are easily connected to new cartridges, and the cartridges are readily unlatched from the dispenser after connection of the handle to the cartridge. The cutting edges of the blades of the razor, including a trimming blade if one is included, are protected from damage during insertion of the cartridge into the dispenser and removal of the cartridge from the dispenser. The use of blade unit regions and overlying angled regions provides for conserved space along the base of the dispenser and efficient placement of cartridges for a given peg space requirement for the dispenser. The user is prevented from connecting the handle to a cartridge in the wrong orientation due to asymmetrical features of the dispenser that provide a visual cue to prompt the user to properly orient the dispenser. The dispenser drains and vents well, allowing it to be used in a damp environment, such as the bathroom, without damage to the cartridges during extended storage.

The details of one or more embodiments of the invention are set forth in the accompanying drawings and the description below. Other features and advantages of the invention will be apparent from the description and drawings, and from the claims.
FIG. 1 is a perspective view of a dispenser for razor blade cartridges. FIG. 1A is a perspective view of the dispenser, taken from a different angle, showing a cartridge in the dispenser. FIGS. 1B and 1C are enlarged detail views, in partial cross-section, showing a protrusion on the cartridge separate from and engaged with, respectively, a latch on the dispenser housing.
FIG. 2 is a perspective view showing a replaceable razor cartridge aligned with a handle on which the cartridge is connected for use. FIG. 2A is an enlarged front plan view of the cartridge shown in FIG. 2. FIG. 2B is an enlarged rear plan view of the cartridge shown in FIG. 2. FIG. 2C is a perspective view of the blade unit of the cartridge, with the blades omitted. FIG. 2D is an enlarged perspective view of the portion of the blade unit of FIG. 2C indicated by circled area D in FIG. 2.
FIG. 3 is a top plan view of the FIG. 1 dispenser.
FIG. 4 is a vertical sectional view, taken along line 4--4 of FIG. 3, of the FIG. 1 dispenser.
FIG. 5 is a perspective view of the bottom part of the FIG. 1 dispenser. FIG. 5A is a bottom plan view of the bottom part.
FIG. 6 is a vertical sectional view, taken along line 6--6 of FIG. 4, of the upper part of the FIG. 1 dispenser. FIG. 6A is a vertical section view of the upper part, taken along line 6A-6A of FIG. 4. FIG. 6B is an enlarged detail view of area B in Fig. 6, showing a single angled divider and latch of the FIG. 1 dispenser.
FIG. 7 is an exploded view of a handle connecting structure at the upper end of the FIG. 2 handle.
FIG. 8 is a sectional view of the end of the FIG. 7 handle connecting structure engaged with the cartridge connecting structure of the cartridge of FIG. 2. FIG. 8A is similar to FIG. 8, but shows the cartridge connecting structure only partially engaged.
FIG. 9 is an illustration showing the position of a FIG. 2 cartridge stored between dividers in a section of the FIG. 1 dispenser.
FIGS. 10-10C are illustrations showing the positions of the cartridge, , dispenser components, and handle during connection of the handle to a cartridge in the FIG. 1 dispenser and removal of the connected cartridge from the dispenser.
FIG. 11 is a bottom plan view of the upper part of the dispenser. Fig. 11A is a sectional view taken along line 11A-11A in FIG. 11.

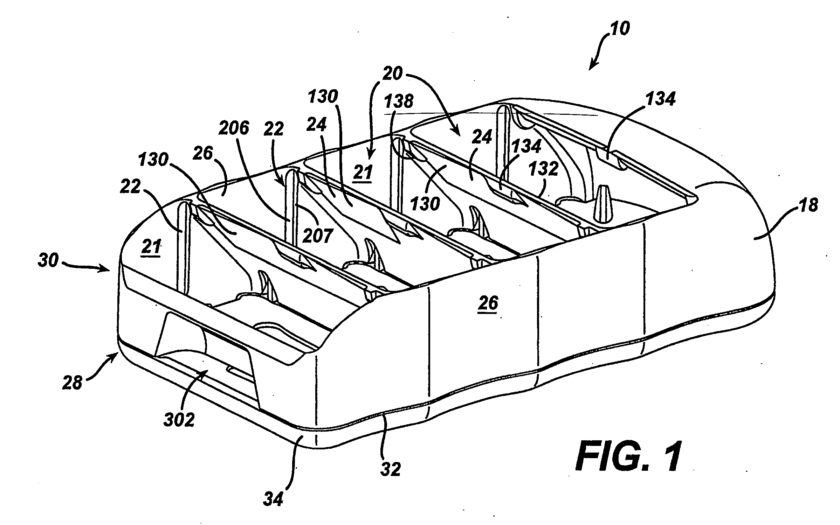

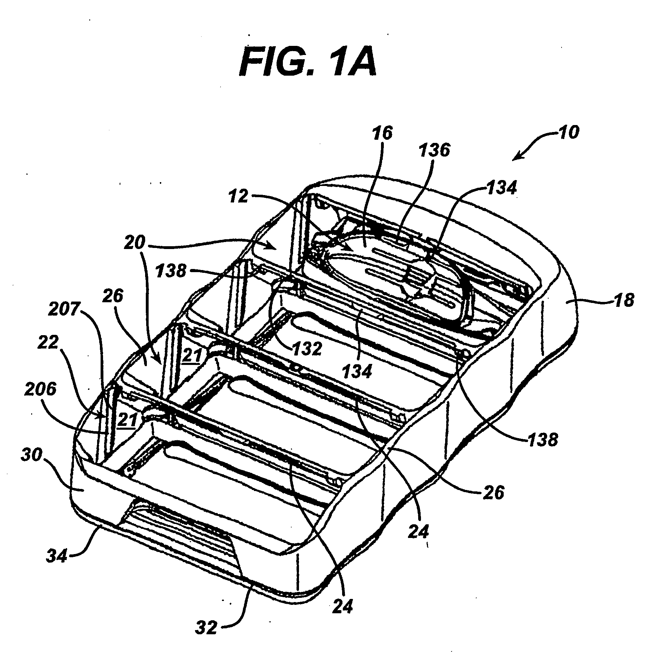

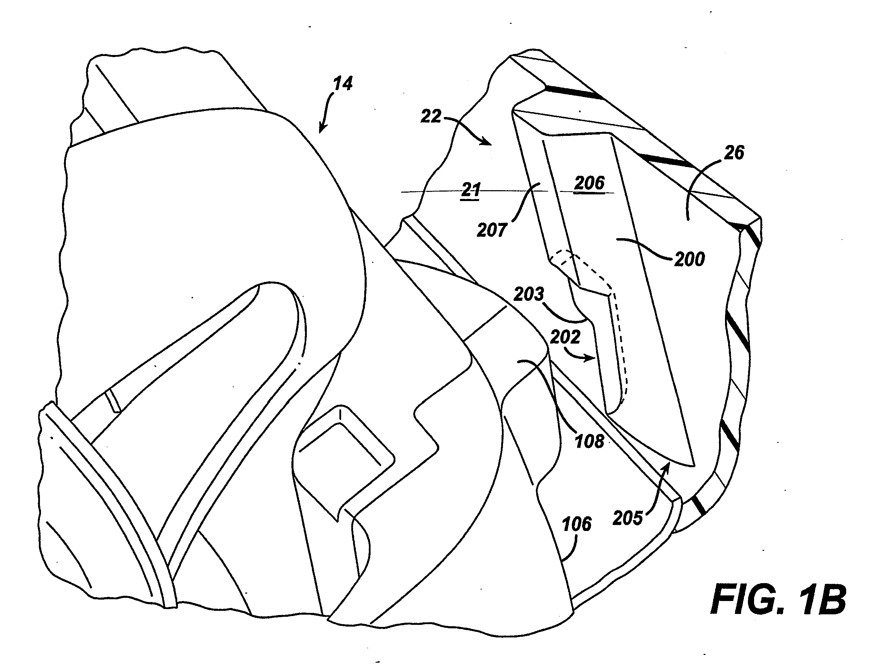

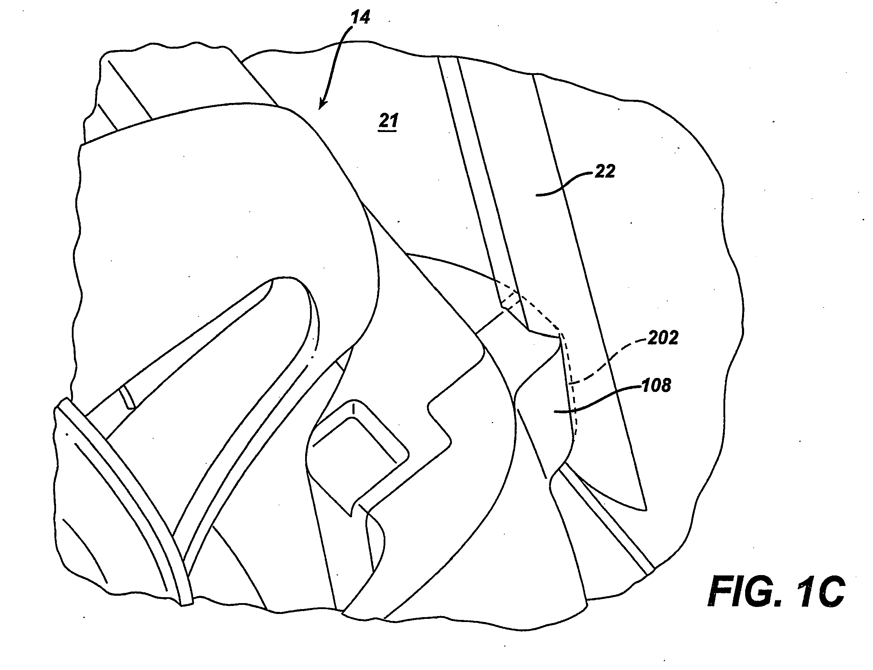

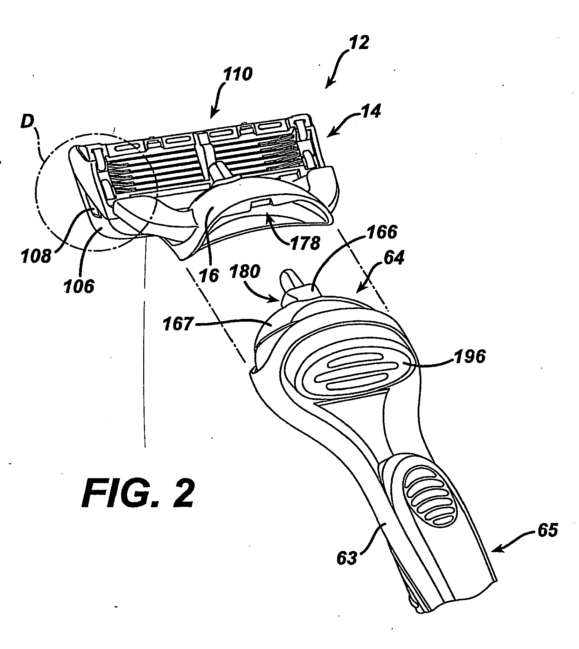

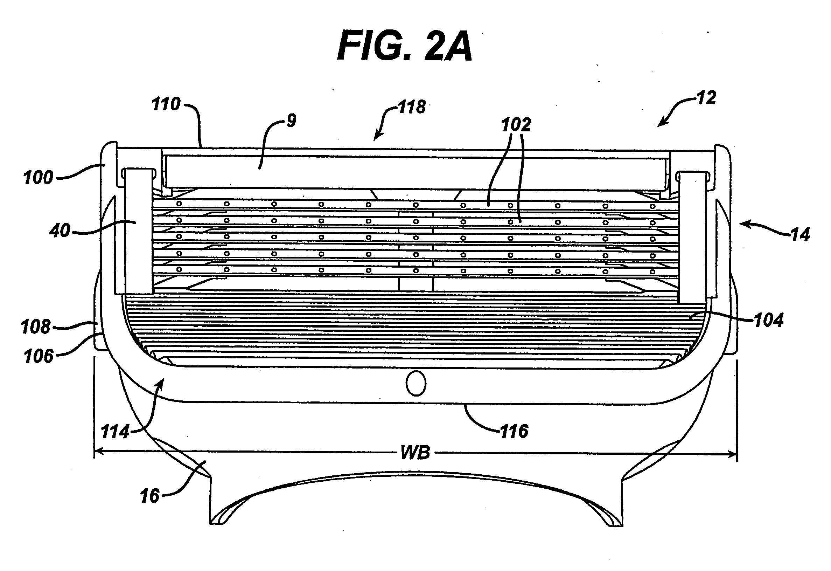

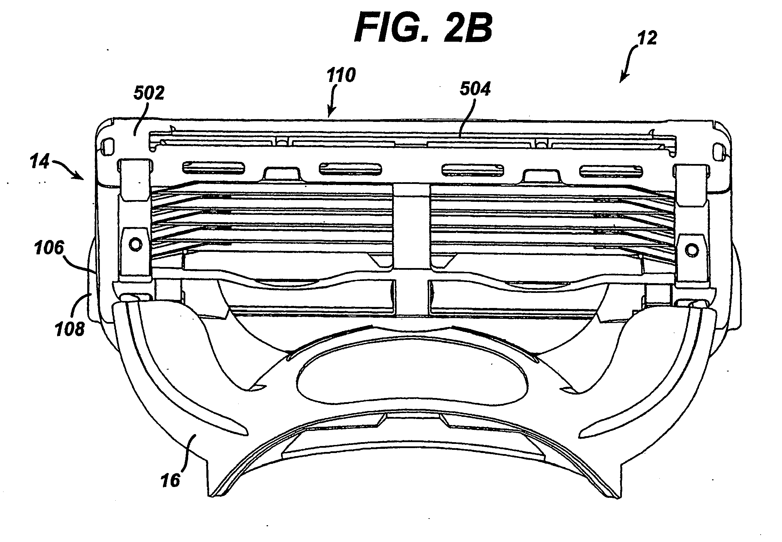

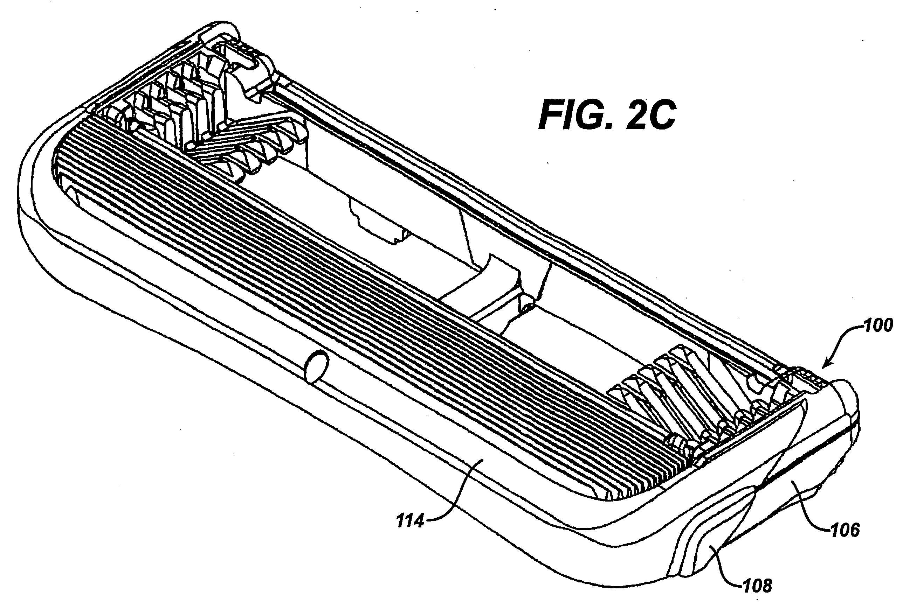

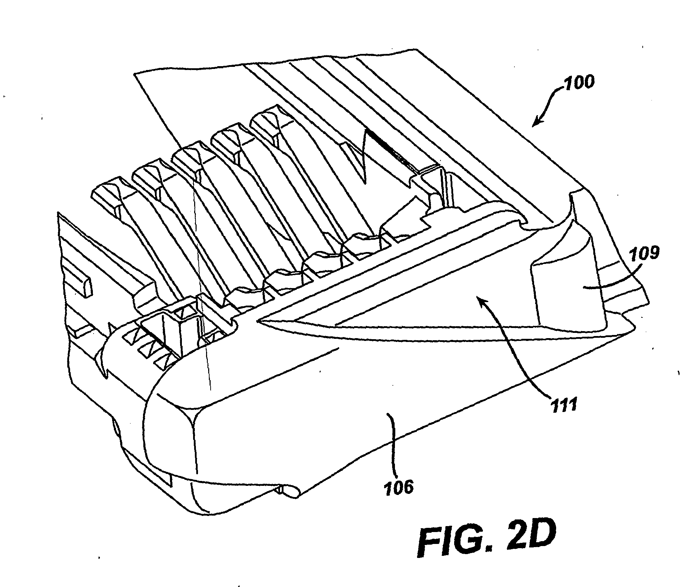

FIGS. 1-1A show a cartridge dispenser 10 (FIG. 1) for storing razor blade cartridges 12 (FIG. 2). Referring to FIG. 2, each razor blade cartridge 12 includes a blade unit 14 that is pivotally connected to a cartridge connecting structure 16. Cartridge connecting structure 16 is constructed to engage a handle connecting structure 64 disposed at the upper end of hand gripping portion 65 of the handle 63, as will be discussed in further detail below.

Referring to FIG. 2A, blade unit 14 includes a housing 100 constructed to hold a plurality of blades 102, a pair of clips 40 for maintaining cutting edges of the blades at a desired exposure, and an elastomeric fin guard 104 which extends across the length of the housing and around side walls 106 of the housing. Each of the side walls of the housing includes an elastomeric protrusion 108, the features of which will be discussed in detail below. These protrusions are configured to engage corresponding latches 22 on dispenser 10, as will also be discussed in detail below.

Referring to FIG. 2B, cartridge 12 also includes a trimming blade assembly 110, secured to the back of the housing, which includes blade carrier 502 and a trimming blade 504 mounted thereon. Blade carrier 502 may be made of, for example, 0.011" thick stainless steel sheet metal that has been cut and formed. The blade carrier shown in FIG. 2B provides structures for supporting trimming blade 504 and defining a trimming guard and cap surfaces therefore and for attaching the trimming blade assembly to the housing.

The blade unit 14 also includes a lubricating strip 9 that provides a lubricious shaving aid and is received in slot at the rear of the housing. Lubricating strip 9 may be made of a material comprising a mixture of a hydrophobic material and a water leachable hydrophilic polymer material, as is known in the art and described, e.g., in U.S. Pat. Nos. 5,113,585 and 5,454,164.

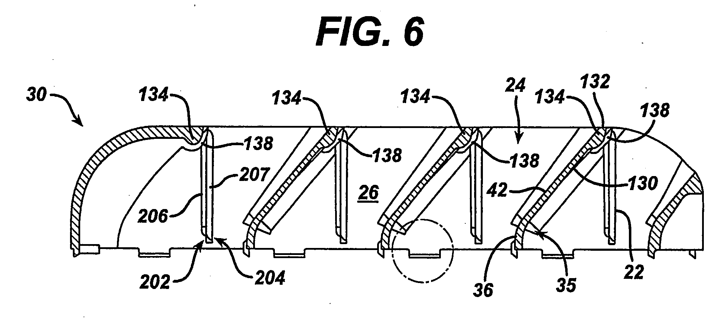

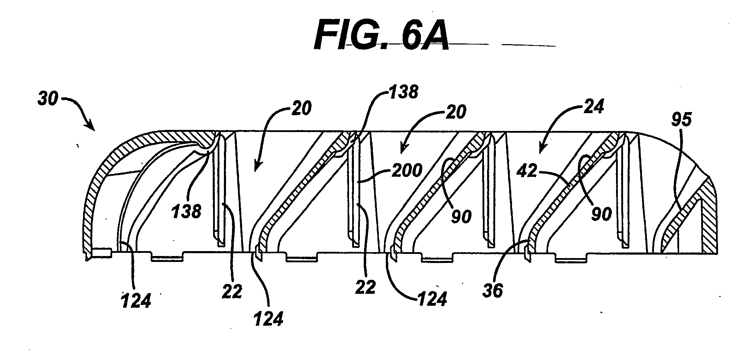

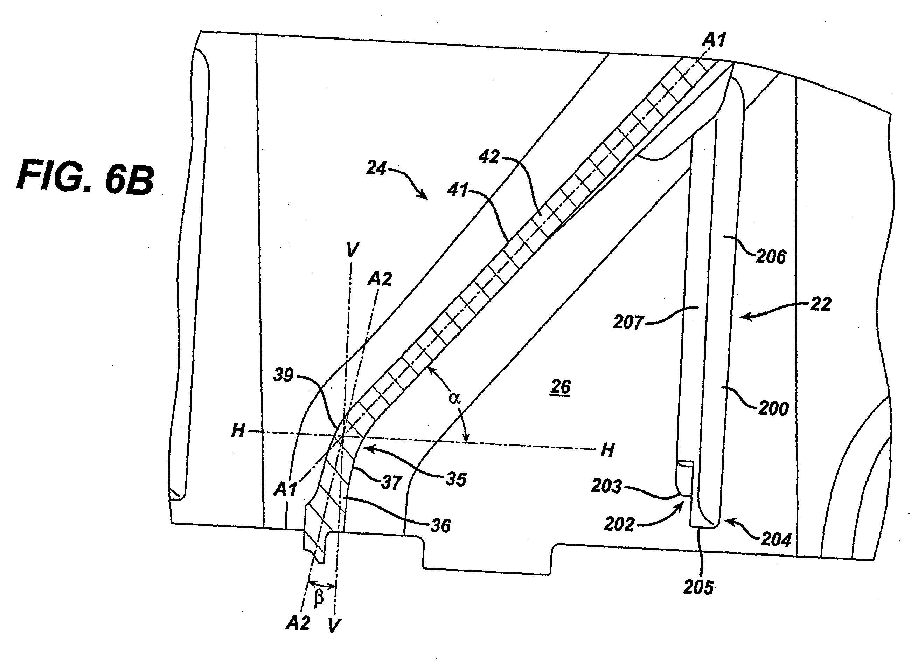

Referring now to FIGS. 1-1A, dispenser 10 includes a housing structure 18 that defines sections 20 for receiving cartridges 12. Each section includes a pair of latches 22, described in detail below, configured to engage the elastomeric protrusions 108 on the blade unit 14 and thereby retain each cartridge 12 in its respective section 20. Sections 20 are defined by cartridge dividers 24 and side walls 26 of housing structure 18. Referring to FIGS. 6-6B, each cartridge divider 24 includes a lower, generally perpendicular blade unit divider portion 36, at the bottom, and an upper angled divider portion 42 above it. The blade unit divider portion 36 and side walls 26 define a cavity dimensioned to receive the blade unit 14 of the cartridge.

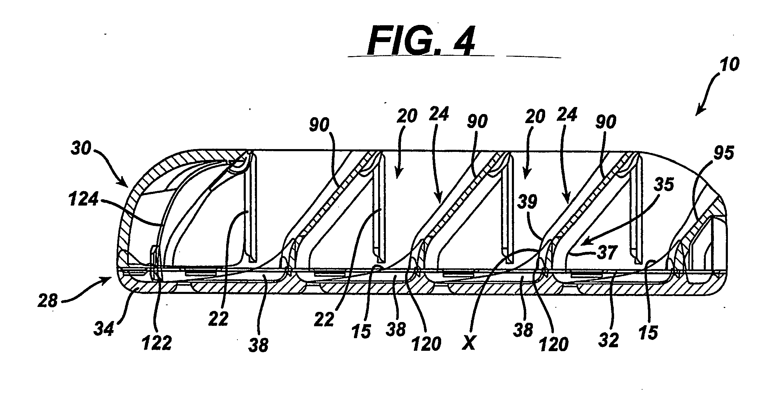

Dispenser 10 is generally manufactured by joining two molded parts, a bottom part 28 and an upper part 30 (e.g., by ultrasonic welding) at seam 32 (FIGS. 1 and 4).

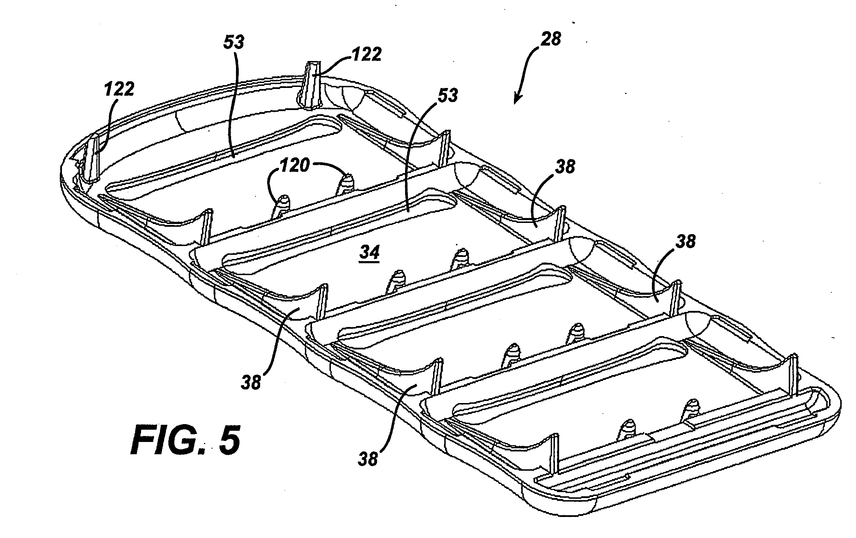

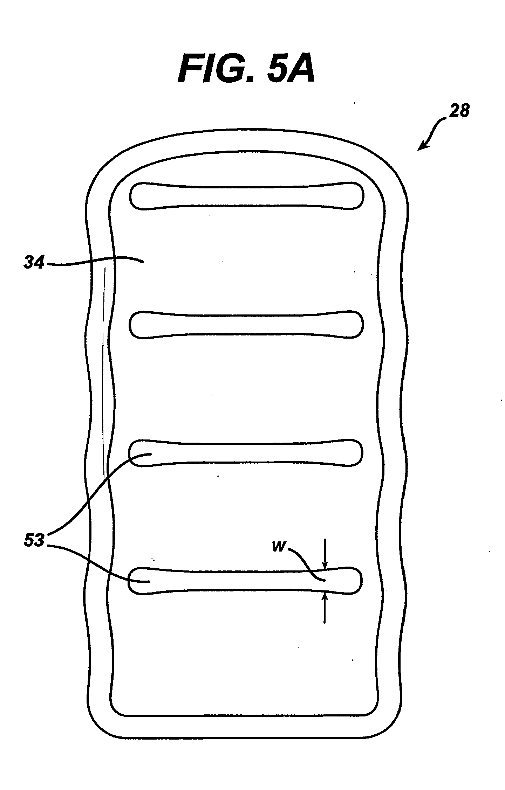

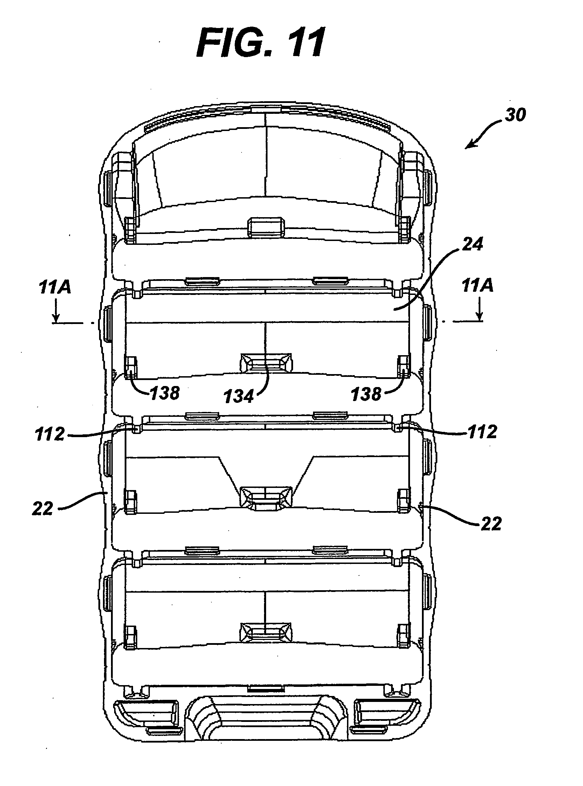

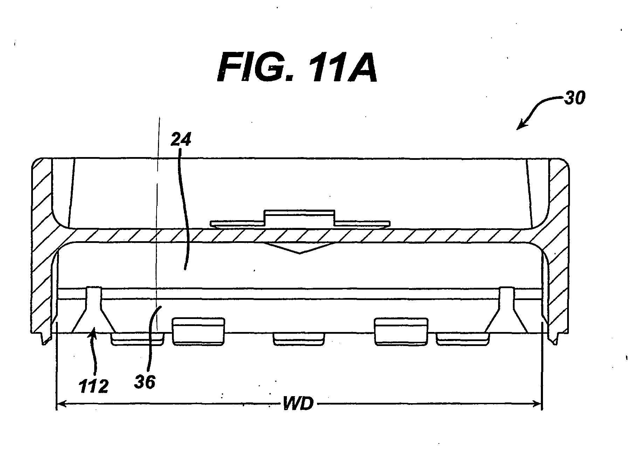

Referring to FIGS. 4 and 5, bottom part 28 includes a base 34 and a plurality of pairs of contoured cartridge supports 38 which extend upwardly from the base. The cartridge supports are arranged so that each section 20 of the assembled dispenser will include a pair of the supports. When the upper and bottom parts 28, 30 are assembled, as shown in FIG. 4, cartridge supports 38 are received by openings 112 (FIG. 11A) in the lower blade unit divider portions 36 of the upper part 30.

The cartridge supports 38 are positioned so that when a cartridge 12 is inserted in a section 20 the cartridge supports will be aligned with clips 40 at the ends of blade unit 14 (FIG. 2A), so as to avoid contact of the blades 102 with the cartridge supports 38. The cartridge supports 38 have a smoothly curved upper edge 15, having a concave curvature over which the clips of the blade unit can ride as the cartridge is inserted into and remove from the section 20.

Referring to FIG. 5A, base 34 also includes drainage openings 53 that are each associated with a section 20 for receiving a respective cartridge 12. These drainage openings are relatively large, e.g., have a width W of at least about 2.5 mm and a length approximately equal to (e.g., within about 5-15% of) the length of the strip 9, typically about 25-35 mm, so as to provide good drainage and drying of the cartridge. The openings may have areas of slightly larger width at their ends, as shown.

Referring to FIGS. 1-1A, 4 and 6, the upper part 30 includes the latches 22, which extend along the inner surface 21 of the side walls 26, and the angled dividers 24, which are connected to side walls 26 along the entire length of their side edges.

Latch 22, shown in detail in Fig. 6B, includes an elongated ridge 200 having a notched region 202 at its lower end 204. As shown in Fig. 1C, notched region 202 engages and compresses the elastomeric material of the protrusion 108 on the blade unit, retaining the protrusion in an interference fit. Engagement of the protrusion 108 with lower end 204 inhibits horizontal movement of the blade unit, while engagement with the bottom surfaces 203 and 205 of the notched region 202 and lower end 204, respectively, inhibits vertical movement. Thus, the engagement of the protrusion with the latch generally prevents the blade unit from slipping either backwards or upwards out of the section 20. The resilience of the elastomeric material allows the protrusion to be easily moved in and out of this interference fit by a force applied through the razor handle by a user, as will be discussed further below. Ridge 200 includes an angled surface 206 that slopes from the side wall 26 toward the front of the dispenser, and terminates in an adjacent flat surface 207 that extends generally parallel to the side wall. Angled surface 206, seen best in FIGS. 1A-1C, is provided to allow the protrusion 108 to slide past the ridge 200 when the cartridge is inserted into the section 20.

It is not necessary that the ridge 200 extend substantially the full height of the side wall 26, as shown. Instead, ridge may be replaced by a smaller raised feature (not shown) positioned in the vicinity of the notched region 202, as long as the raised feature provides a raised area that is sufficient to create an interference fit with the protrusion 108. However, it is generally preferred that the ridge be relatively long, as shown, as this facilitates molding. Providing a ridge 200 may also be preferred because angled surface 206 will tend to help guide the blade unit as it is inserted into the section 20.

Protrusion 108 consists of an underlying raised portion of the side wall of the housing and an overlying molded elastomeric protrusion covering the raised portion. The underlying raised portion 109 is shown in FIG. 2D, which shows the housing 100 without the elastomeric fin guard 104. The raised portion 109 is disposed in a recessed region 111 of the housing side wall 106 that is configured to receive a side portion of the fin guard 104. When the elastomeric material is applied to the housing to form the elastomeric fin guard, the elastomeric material is molded so that the elastomer that overlies the raised portion 109 defines the shape of the protrusion 108. This molded elastomer and the underlying raised portion 109 together provide the resilient characteristics of protrusion 108. In alternative embodiments, the underlying housing surface may be relatively flat (generally a recessed area will be provided, to accommodate the thickness of the side portions of the fin guard, but the raised portion 109 may be omitted if desired). In other alternative embodiments, the raised portion of the housing may extend further from side wall 106, and/or may have a different overall geometry, and the elastomer may be applied in a layer of uniform thickness that conforms to the shape of the underlying raised portion, rather than the elastomer being molded to define the shape of the protrusion 108.

The properties and dimensions of the protrusion 108 are generally selected to provide an interference fit between the blade unit and the dispenser that is sufficiently secure so that the blade unit does not slide out of the dispenser when the dispenser is moved or dropped, but that will allow the cartridge to be removed from the dispenser relatively easily by a user when the user attaches a handle to the cartridge and pulls back on the handle. For example, in preferred implementations, a cartridge will not fall out of the dispenser when the dispenser is dropped onto a hard surface from a height of 30 inches, both when the dispenser is initially held in a horizontal orientation (the long axis of the dispenser extending horizontally and the openings of sections 20 facing downwards) and when the dispenser is initially held in a vertical orientation (the long axis of the dispenser extending vertically).

The desired thickness of the elastomeric portion of the protrusion 108, and the overall height H of the protrusion (i.e., the furthest distance that the protrusion extends beyond the side wall 106 in a direction generally parallel to the long axis of the blades), will depend in part on the amount of resistance desired between the protrusion and the latch, the desired durometer of the elastomeric material (which will be influenced by other considerations such as user comfort, skin stretch and manufacturing constraints) and the geometry and position of the latch. Generally, as the interference provided by the geometry of the blade unit and dispenser is increased greater resilience of the protrusion will be required, in which case the thickness of the elastomeric portion would generally be increased.

The amount of interference will vary depending upon the difference , between the protrusion-to-protrusion width of the blade unit (WB, Fig. 2A) and the latch-to-latch width of the dispenser (WD, Fig. 11A). The width WD of the dispenser is measured from the flat surface of one latch to the opposing flat surface of the opposite latch; the width WB of the blade unit is measured from the apex of the outer surface of the protrusion on one side to the apex of the outer surface of the protrusion on the opposite side. WB is greater than WD, creating an interference fit, as a result of the protrusions 108; the width of the blade unit without the protrusions (i.e., from one side wall 106 to the opposite side wall 106) must be less than WD so that the blade unit can slide smoothly in and out of the dispenser sections 20. Generally, WB is preferably from about 0.2 to 0.8 mm, or about 1 to 2% greater than the width WD. However, the difference between WB and WD may vary depending on the thickness and durometer of the elastomer, provided that WB is greater than WD.

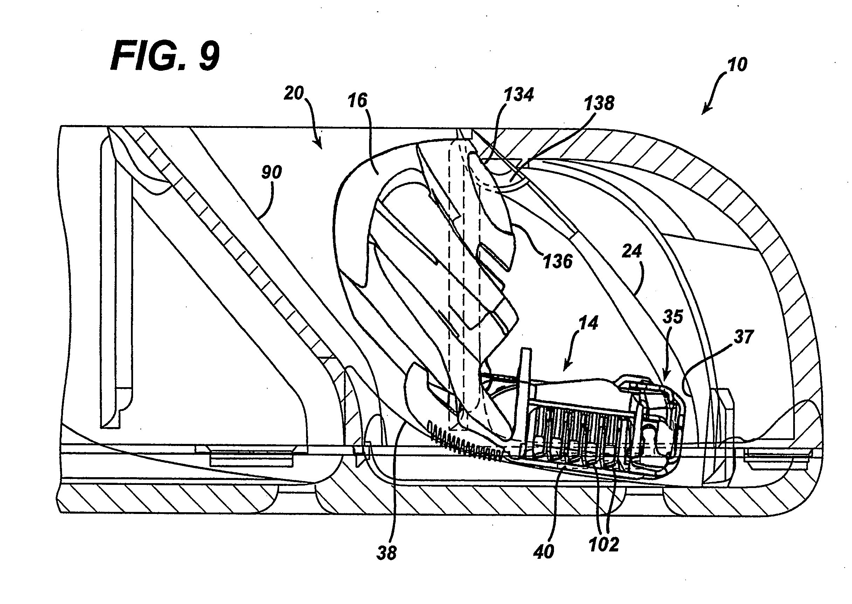

The width of the protrusion (i.e., the dimension measured in the direction of the short axis of the side wall 106) is selected so that the protrusion will contact the latch 22 in a manner so as to produce the desired interference fit. Typically, when the blade unit is in place in a section 20 as shown in Fig. 9, the top of the protrusion will be positioned at or above (preferably above) the bottom surface 203 of the ridge 200. The length L of the protrusion (measured along the long axis of the side wall 106) need only be sufficient to allow the protrusion to be engaged by the latch. The length L may be as long as desired.

The protrusion may have any desired shape, e.g., round, square, rectangular, diamond-shaped, etc., provided that the protrusion has a sufficient effective area to provide an interference fit with the latch. Preferably, the protrusion includes a smoothly tapered side surface, to facilitate insertion of the cartridge into the dispenser.

The angled dividers 24 have a geometry that allows the dispenser to store a relatively large number of cartridges for a given dispenser size, and that also allows cartridges to be securely stored in, yet easily removed from, the sections. Front wall 48 is similar in geometry and features to the angled dividers 24.

Referring to FIG. 6B, axis A1, extending through angled divider portion 42, is disposed at an angle with respect to the horizontal (H). Preferably, angle is no less than 43 degrees; a value of about 43-53 degrees, e.g., 48 degrees, provides a good balance between providing a sufficient number of cartridges in the lengthwise dimension of dispenser 10 (relating to peg space on a point of purchase display rack) and avoiding undue thickness for dispenser 10. Additional sections 20 for cartridges 12 could be provided by increasing the angle to a higher angle, e.g., up to 90 degrees, but the height of the dispenser would be increased accordingly. A value of about 42 degrees is believed to provide a lower boundary permitting access to cartridge 12 given the angular orientation of blade unit 14 with respect to cartridge connecting structure 16, i.e., the extent to which blade unit 14 can pivot with respect to cartridge connecting structure 16.

Axis A2, extending through the generally perpendicular blade unit divider portion 36, forms an angle with the horizontal. Angle is preferably about 0 to 15 degrees, e.g., about 10 degrees. While divider portion 36 is generally slightly inclined toward the rear of the dispenser due to manufacturing constraints, portion 36 may be perpendicular to the base.

The region 35 at which portions 36 and 42 intersect provides a stop surface 37, inhibiting further forward or upward movement of a cartridge once the cartridge has been inserted into the respective section. Referring to FIG. 4, on the other side of the divider 24 the intersection of the concave surface 15 of the cartridge supports 38 with the convex curvature of surface 39 of the region 35 creates a discontinuity (area X, FIG. 4) that helps to push the front edge 116 of the blade unit 12 up onto surface 41 of the upper angled divider portion 42 as the cartridge is being withdrawn from the dispenser.

Selection of angle , discussed above, affects the geometry of region 35 (discussed below) which provides a stop surface for the cartridge within section 20. Thus, if angle is relatively large, the region 35 may not adequately inhibit upward movement of the cartridge.

Angled divider portions 42 include a substantially flat surface 90 over which the clips 40 of the blade unit can ride as the cartridge is inserted into or removed from a section 20. Because surface 90 is relatively flat (rather than bowed out in the center) the cutting edges of blades 102 will not contact the surface 90 during insertion and removal of the cartridge. Thus, the interaction of surface 90 with clips 40 and/or the housing protects the blade edges from contact and possible damage.

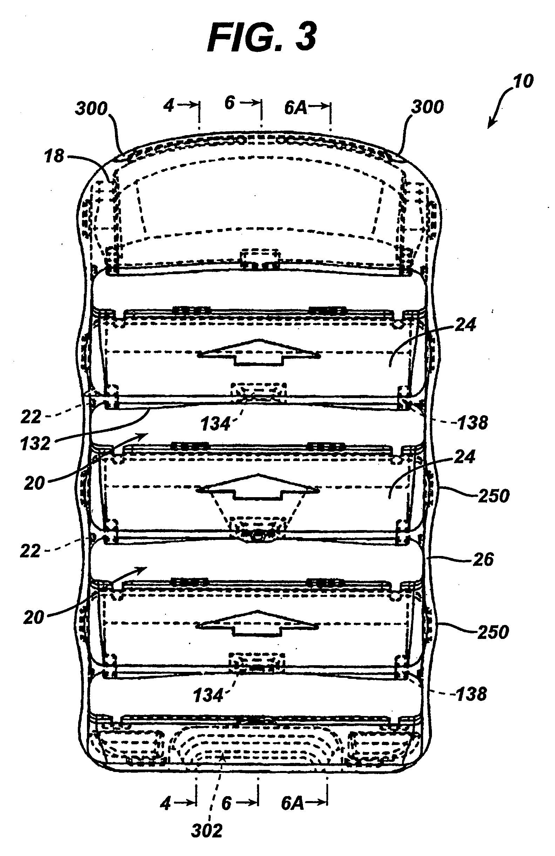

Referring to FIGS.1 and 6, the inner surface 130 of each angled divider portion 42 includes several features adjacent the top edge 132 of the divider. A , stabilizing feature 134 is centrally located along each top edge 132. Stabilizing feature 134 is constructed to abut the outer forward surface 136 of the cartridge connecting structure 16 when the cartridge is in the section 20, as shown in FIGS. 1A and 9. The stabilizing feature 134 inhibits movement of the connecting structure 16 along the long axis of the dispenser, reducing the angular rotation of the connecting structure 16 relative to the blade unit during movement of the dispenser. The stabilizing feature 134 also maintains the connecting structure 16 at a desirable angle for insertion of the handle connecting structure of a handle. A pair of raised ribs 138 are disposed adjacent each top edge 132, near the side walls 26. As shown in FIG. 6, these ribs 138 extend further from surface 130 than does the stabilizing feature 134. As a result, ribs 138 protect the trimming blade 504 from contact with the stabilizing feature 134 during insertion and withdrawal of the cartridge. Preferably, the ribs 138 extend at least 0.75 mm, preferably 0.85 to 1.0 mm, beyond the stabilizing feature in all directions. The top edge 132 is also preferably curved (FIG. 3) to minimize damage to the trimming blade.

The upper part 30 and/or the bottom part 28 may also include molded features that provide tactile and/or aesthetic qualities, e.g., molded waves 250 (FIG. 3) that extend vertically along the outer surface of side walls 26 to provide a gripping surface. Waves 250 may be arranged to nest with the waves of another dispenser that is rotated 180 degrees, to minimize the peg space and packaging materials required to package two dispensers side-by-side.

Bottom part 28 and upper part 30 also include cooperating features that help to maintain proper alignment of the upper and bottom parts prior to and during welding. For example, as shown in FIG. 5, bottom part 28 includes pairs of protrusions 120 that act as a stop to restrict movement of lower edges 124 of dividers 24 on upper part 30 (FIG. 6). These protrusions 120 help to align the upper and bottom parts, and also prevent the dividers 24 from deflecting forward in response to downward pressure that may be applied during a welding operation. Bottom part 28 also includes alignment pins 122 that abut the inner front surface 124 of the upper part 30 at the front corners thereof.

When a cartridge 12 is loaded into a respective section 20, the blade unit 14 is guided by upper surface 90 of divider 42 (or of back angled wall 95) and passes through angled region 35 into the blade unit receiving bottom portion of section 20. The side regions of blade unit 14 are also guided along the upper contoured surfaces of cartridge supports 38 and rest on supports 38. When insertion is complete, the rear edge of the blade unit (trimming blade assembly 110) comes to rest against surface 37 of blade unit divider portion 36. The cutting edge of the trimming blade 504 faces upward and thus does not contact the divider 24 when the blade unit is positioned in the section 20 (FIG. 9). As discussed above, the stabilizing feature 134 on each cartridge divider 24 holds the connecting portion 16 of the cartridge 12 in a desired position and inhibits movement of the connecting portion 16 after the cartridge is inserted into the section 20. FIGS. 1A and 9 show the position of cartridge connecting structure 16 in section 20 during storage and prior to connection to handle 63.

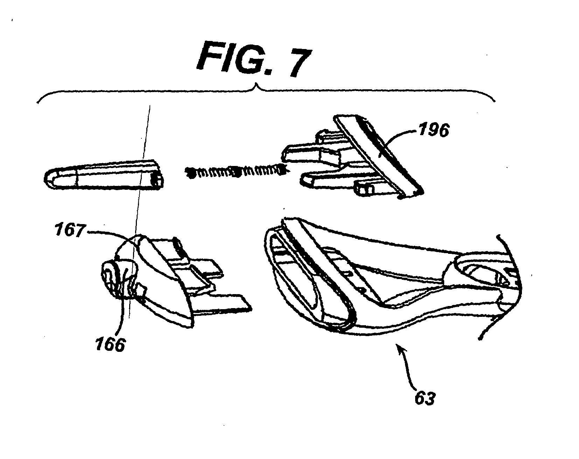

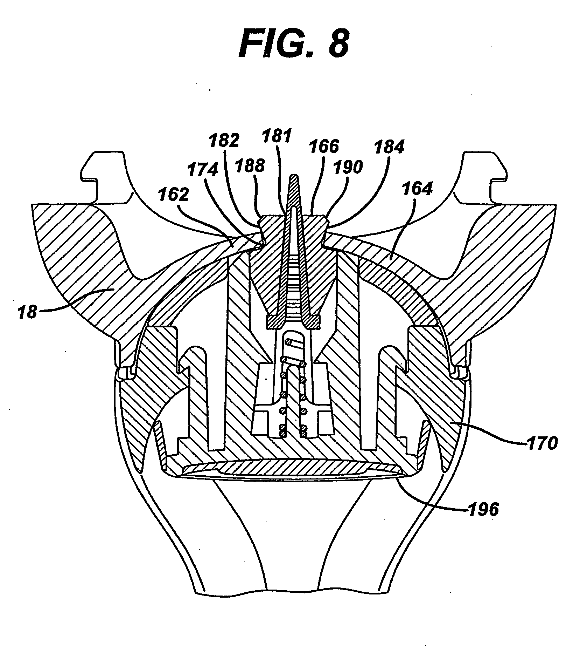

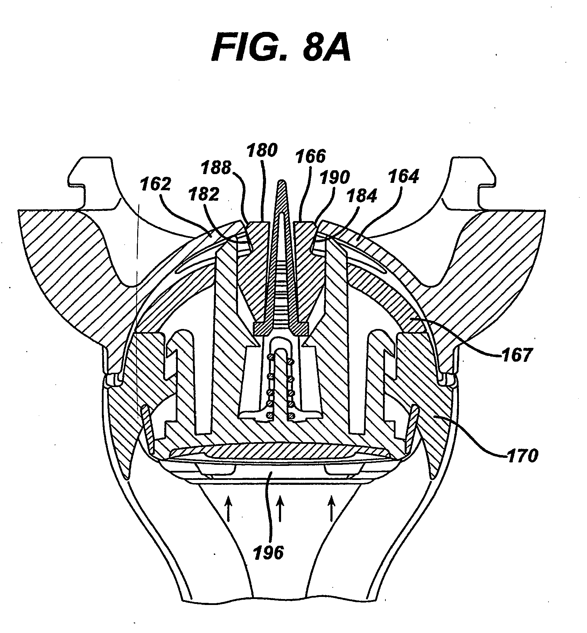

Referring to FIGS. 2, 7-8A and 10, to connect the cartridge to the handle, the user pushes the handle connecting structure 64 forward into the back end 178 of the cartridge connecting structure 16. The handle connecting structure includes a body 167 from which a projection 166 protrudes. Projection 166 is positioned to be received by an opening in the cartridge connecting structure 16 that is defined by the opposed edges of a pair of latches 162, 164 (FIGS. 8-8A) on the cartridge connecting structure. As the projection 166 is inserted into the opening, latches 162 and 164 elastically deflect to receive the distal end 180 of the projection 166. When the latches 162 and 164 clear outer edges 188 and 190 of the distal end 180 of the projection 166, the latches 162 and 164 recover toward their initial, undeflected position as they engage side surface 182 and 184 of the projection (FIG. 8).

Referring to FIG. 8A, to disconnect the cartridge from the handle, the user actuates a spring-biased release button 196 by pressing the button 196 forward relative to handle casing 170. Pushing button 196 forward extends pusher arms 192 and 194 into engagement with the latches 162 and 164. This engagement forces open the interference fit between the latches 162, 164 and the projection 166 to release the cartridge from the handle.

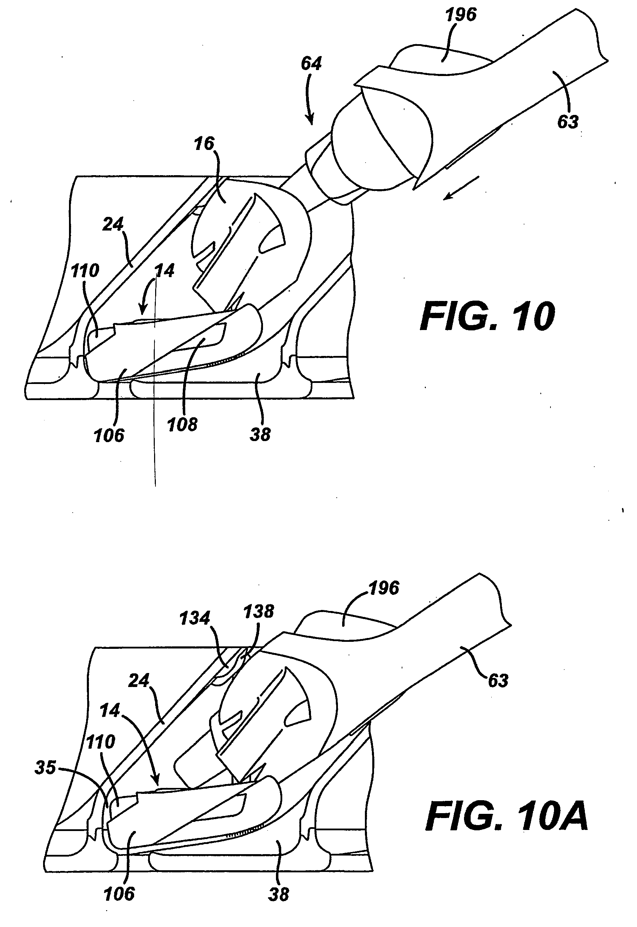

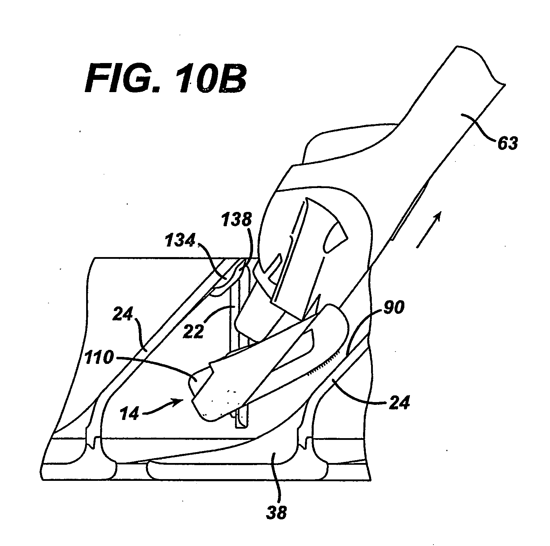

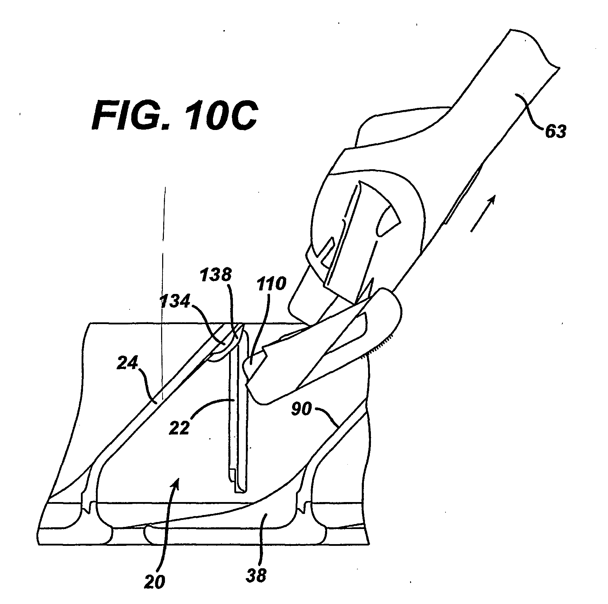

FIGS. 10-10C show various stages in the connection of the cartridge to the handle and removal of the cartridge from the section. When a shaver desires to replace a cartridge, the used cartridge is ejected from handle 63 using button 196 and discarded (or inserted into a vacant section 20 in a dispenser 10, as is discussed below). Then a new cartridge 12 in dispenser 10 is connected to handle 63 by engaging the connecting parts of the handle and cartridge in the manner discussed above (FIGS. 10-10A). The user then retracts handle 63 and connected cartridge 12 from dispenser 10, typically along the same axis along which the handle traveled during connection. The interference fit between the elastomeric protrusion 108 and the latch 22 is disengaged by the force exerted by the user pulling back and up on the handle 63. As the user continues to pull on the handle, cartridge 12 moves from the initially connected position of FIG. 10A to the initial retraction position of FIG. 10B and then the further retracted position of FIG. 10C. As the handle and connected cartridge move further outward from the position shown in FIG. 10C, trimming blade 504 passes stabilizing feature 134. As discussed above, stabilizing feature 134 is prevented from contacting the trimming blade 504 by ribs 138.

The user is prevented from connecting handle 63 to cartridge 12 in the wrong orientation owing to asymmetrical features of handle connecting structure 64 and cartridge connecting structure 16. For example, the contours of the body of the cartridge connecting structure and the body of the handle connecting structure are asymmetrically shaped, when viewed from the front, to assist the user in connecting the cartridge 12 to the handle 14 in the correct orientation. Thus, the body of the cartridge connecting structure may be generally D-shaped when seen from the front, and the body of the handle connecting structure may have a corresponding D-shape. These features prevent insertion of the handle connecting structure into the cartridge connecting part unless handle 63 is in the proper orientation (i.e., not upside down) regardless of whether the cartridge is in dispenser 10 or not.

The asymmetrical shape of housing structure 18 (i.e., rounded at the top and squared off at the bottom) also provides a visual cue to the user, helping the user to properly orient the dispenser prior to inserting a handle into a cartridge. The housing structure 18 may also include a logo or other indicia (e.g., the word "Cartridge" as shown in the figures, or a tradename or logo) to help the user to orient the dispenser.

When a user wishes to replace a cartridge 12 after it has been used for shaving, the cartridge can be returned to dispenser 10 by insertion along the same axis used during the connection step shown in FIG. 10, and ejection of the cartridge using button 196. As the user pushes forward and down during insertion, the protrusion 108 will automatically be engaged by latch 22, retaining the cartridge in place during retraction of the handle. Liquid on a used blade unit 14 stored in the dispenser 10 in this manner can drain through drainage holes 53 (FIG. 5).

The dispenser may include open areas 300, 302, at the front and rear, respectively (FIG. 3) constructed to receive corresponding features on a holder (not shown), such as an organizer tray.

A number of embodiments of the invention have been described. Nevertheless, it will be understood that various modifications may be made without departing from the spirit and scope of the invention.

For example, while the dispenser described above is formed by joining two molded parts, if desired the dispenser may be a single, integral part. Moreover, the stabilizing feature 134 and ribs 138 may be replaced by other features that will inhibit movement of the connecting structure and that will protect the trimming blade during removal.

## Claims

1. A combination comprising: a cartridge dispenser (10) comprising a housing structure (18) including a base (28) and dividers (24) that define sections (20) for receiving respective cartridges and retaining the cartridges in predetermined positions, each section comprising a latch (22) that releasably holds a respective cartridge in a latched position within the section; and a replaceable razor blade cartridge (12) comprising a blade unit (14) and a cartridge connecting structure (16) for connecting the blade unit to a handle (63) by movement of the handle toward the cartridge connecting structure, **characterized in that** the blade unit includes an elongated housing (100) having a resilient latching portion (108) for engagement by the latch on the cartridge dispenser.

2. The combination of claim 1, wherein the resilient latching portion comprises an elastomer.

3. The combination of claim 2, wherein the resilient latching portion further comprises a raised portion (109) of the housing structure underlying the elastomer.

4. The combination of claim 1, wherein the latch is sufficiently rigid to resist movement during removal of the cartridge from the dispenser.

5. The combination of claim 1, wherein each section comprises a pair of latches.

6. The combination of claim 5, wherein the latches are positioned on inner surfaces (21) of opposed side walls (26) of the housing.

7. The combination of claim 1, wherein the latch comprises a latch protrusion (200) shaped to interact with the resilient latching portion, which comprises a corresponding protrusion on the blade unit.

8. The combination of claim 5 or 6, wherein each latch comprises a latch protrusion (200) shaped to interact with the resilient latching portion, which comprises a corresponding protrusion on the blade unit.

9. The combination of claim 7, wherein the latch protrusion is positioned to retain the blade unit within the section by an interference fit with the blade unit protrusion.

10. The combination of claim 8, wherein each latch protrusion is positioned to retain the blade unit within the section by an interference fit with the corresponding blade unit protrusion.

11. The combination of claim 7, wherein the latch protrusion comprises an elongated ridge.

12. The combination of claim 7 or 11, wherein the latch protrusion includes a notch (202).

13. The combination of claims 7 or 11, wherein the latch protrusion includes a first surface (203,205) positioned to inhibit vertical movement of the protrusion on the blade unit and a second surface (204) positioned to inhibit horizontal movement of the protrusion on the blade unit.

14. The combination of claim 11, wherein the ridge includes an elongated angled surface configured to facilitate insertion of a blade unit into the respective section.

15. The combination of claim 11, wherein the ridge extends vertically along, and is attached to, an inner side wall of the dispenser.

16. The combination of claim 8, wherein each latch protrusion comprises an elongated ridge.

17. The combination of claim 8 or 16, wherein each latch protrusion includes a notch.

18. The combination of claims 8 or 16, wherein each latch protrusion includes a first surface positioned to inhibit vertical movement of the respective protrusion on the blade unit and a second surface positioned to inhibit horizontal movement of the respective protrusion on the blade unit.

19. The combination of claim 16, wherein each ridge includes an elongated angled surface configured to facilitate insertion of a blade unit into the respective section.

20. The combination of claim 16, wherein the ridges extend vertically along, and are attached to, opposed inner side walls of the dispenser.

21. The combination of claim 1, wherein the cartridge dividers (36) include blade unit dividers that extend from the base, are generally perpendicular to the base, and define blade unit regions in which the blade units are received.

22. The combination of claim 21, wherein the cartridge dividers further include angled dividers (42) that extend from the ends of respective blade unit dividers at acute angles with the base and define angled regions through which the blade units pass in delivery to and removal from the blade unit regions and in which the cartridge connecting structure is received.

23. The combination of claim 22, wherein an angled region of one section partially overlies a blade unit region of an adjacent section.

24. The combination of claim 1, wherein the dispenser has drainage holes (53) associated with respective sections.

25. The combination of claim 1, further comprising raised members (38) on which end structures (40) of the cartridge are supported so as to avoid contact of the blades with the dispenser.

26. The combination of claim 1, further comprising a stabilizing feature (134), disposed on an upper edge (132) of at least some of said cartridge dividers, constructed to engage the cartridge connecting portion and restrict movement of the cartridge connecting portion within an upper opening of the corresponding section.

27. The combination of claim 26, further comprising a feature (138), disposed on said upper edge, constructed to prevent contact between the stabilizing feature and a rear edge (110) of the cartridge.

28. The combination of claim 27, wherein cartridge includes a trimming blade (504) mounted along the rear edge of the cartridge.

29. The combination of claim 26, wherein said upper edge is radiused to prevent contact between the stabilizing feature and a rear edge of the cartridge.

30. The combination of claim 25, wherein each of the raised members has a concave upper edge.

31. The combination of claim 30, wherein an upper portion of the concave upper edge of each raised member is adjacent a lower portion of a convex surface of a corresponding one of the cartridge dividers.

32. The combination of claim 1, wherein the width (WB) of the blade unit is from about 1 to 2% greater than the width (WD) of the dispenser.

33. The combination of claim 1, wherein the width (WB) of the blade unit is preferably from about 0.2 to 0.8 mm greater than the width (WD) of the dispenser.

34. A method of using a replaceable razor cartridge (12) comprising: storing a cartridge in a dispenser (10) comprising a housing structure (18) including a base (28) and angled cartridge dividers (24) that define sections (20) for receiving respective cartridges and retaining the cartridges in predetermined positions, each section comprising a latch (22) shaped and positioned to interact with a corresponding resilient feature (108) on the blade unit of the cartridge, each latch being sufficiently rigid to resist movement during removal of a cartridge from the dispenser; moving a handle connecting structure (64) of a handle (63) toward cartridge connecting structure (16) of the cartridge to connect the cartridge to the handle; and removing the cartridge from the dispenser while connected to the handle by retracting the handle from the dispenser.

35. The method of claim 34, further comprising, after use of the razor, replacing the cartridge in the same or a different dispenser by moving the handle and connected cartridge into the dispenser, disconnecting the cartridge from the handle, and retracting the handle while the cartridge remains in the dispenser.

36. The method of any of claims 34 to 35, wherein the handle connecting structure and cartridge connecting structure include corresponding asymmetrical features that will interfere with each other when the handle is in an improper orientation, and mate when the handle is in a proper orientation.

## Patentansprüche

1. Kombination, umfassend: einen Kassettenspender (10), umfassend eine Gehäusestruktur (18), umfassend eine Basis (28) und Teiler (24), die Abschnitte (20) zum Aufnehmen von jeweiligen Kassetten und Halten der Kassetten in vorbestimmten Positionen definieren, wobei jeder Abschnitt einen Schnappriegel (22) umfasst, der lösbar eine jeweilige Kassette in einer eingeklinkten Position innerhalb des Abschnitts hält; und eine auswechselbare Rasierklingenkassette (12), umfassend eine Klingeneinheit (14) und eine Kassettenverbindungsstruktur (16) zum Verbinden der Klingeneinheit mit einem Griff (63) durch Bewegen des Griffs in Richtung der Kassettenverbindungsstruktur, **dadurch gekennzeichnet, dass** die Klingeneinheit ein verlängertes Gehäuse (100) mit einem elastischen Einschnappabschnitt (108) zum Eingriff durch den Schnappriegel auf dem Kassettenspender umfasst.

2. Kombination nach Anspruch 1, wobei der elastische Einschnappabschnitt ein Elastomer umfasst.

3. Kombination nach Anspruch 2, wobei der elastische Einschnappabschnitt ferner einen erhöhten Abschnitt (109) der Gehäusestruktur, der unter dem Elastomer liegt, umfasst.

4. Kombination nach Anspruch 1, wobei der Schnappriegel genügend starr ist, um einer Bewegung während der Entfernung der Kassette vom Spender zu widerstehen.

5. Kombination nach Anspruch 1, wobei jeder Abschnitt ein Paar von Schnappriegeln umfasst.

6. Kombination nach Anspruch 5, wobei die Schnappriegel auf inneren Flächen (21) von gegenüberliegenden Seitenwänden (26) des Gehäuses positioniert sind.

7. Kombination nach Anspruch 1, wobei der Schnappriegel eine Schnappriegelvorwölbung (200) umfasst, die geformt ist, um mit dem elastischen Einschnappabschnitt wechselzuwirken, der eine korrespondierende Vorwölbung auf der Klingeneinheit umfasst.

8. Kombination nach Anspruch 5 oder 6, wobei jeder Schnappriegel eine Schnappriegelvorwölbung (200) umfasst, die geformt ist, um mit dem elastischen Einschnappabschnitt wechselzuwirken, der eine korrespondierende Vorwölbung auf der Klingeneinheit umfasst.

9. Kombination nach Anspruch 7, wobei die Schnappriegelvorwölbung positioniert ist, um die Klingeneinheit innerhalb des Abschnitts mittels einer Presspassung mit der Klingeneinheitsvorwölbung zu halten.

10. Kombination nach Anspruch 8, wobei jede Schnappriegelvorwölbung positioniert ist, um die Klingeneinheit innerhalb des Abschnitts mittels einer Presspassung mit der korrespondierenden Klingeneinheitsvorwölbung zu halten.

11. Kombination nach Anspruch 7, wobei die Schnappriegelvorwölbung einen verlängerten Steg umfasst.

12. Kombination nach Anspruch 7 oder 11, wobei die Schnappriegelvorwölbung eine Kerbe (202) umfasst.

13. Kombination nach Anspruch 7 oder 11, wobei die Schnappriegelvorwölbung eine erste Oberfläche (203, 205), positioniert zum Hemmen einer Vertikalbewegung der Vorwölbung auf der Klingeneinheit, und eine zweite Oberfläche (204), positioniert zum Hemmen einer Horizontalbewegung der Vorwölbung auf der Klingeneinheit, umfasst.

14. Kombination nach Anspruch 11, wobei der Steg eine verlängerte winkelige Oberfläche umfasst, die konfiguriert ist, um die Einbringung einer Klingeneinheit in den jeweiligen Abschnitt zu erleichtern.

15. Kombination nach Anspruch 11, wobei sich der Steg vertikal entlang einer inneren Seitenwand des Spenders erstreckt und daran befestigt ist.

16. Kombination nach Anspruch 8, wobei jede Schnappriegelvorwölbung einen verlängerten Steg umfasst.

17. Kombination nach Anspruch 8 oder 16, wobei jede Schnappriegelvorwölbung eine Kerbe umfasst.

18. Kombination nach Anspruch 8 oder 16, wobei jede Schnappriegelvorwölbung eine erste Oberfläche, positioniert zum Hemmen einer Vertikalbewegung der jeweiligen Vorwölbung auf der Klingeneinheit, und eine zweite Oberfläche, positioniert zum Hemmen einer Horizontalbewegung der jeweiligen Vorwölbung auf der Klingeneinheit, umfasst.

19. Kombination nach Anspruch 16, wobei jeder Steg eine verlängerte winkelige Oberfläche umfasst, die konfiguriert ist, um eine Einbringung einer Klingeneinheit in den jeweiligen Abschnitt zu erleichtern.

20. Kombination nach Anspruch 16, wobei sich die Stege vertikal entlang gegenüberliegender innerer Seitenwände des Spenders erstrecken und daran befestigt sind.

21. Kombination nach Anspruch 1, wobei die Kassettenteiler (36) Klingeneinheitsteiler umfassen, die sich von der Basis erstrecken, im Allgemeinen senkrecht zur Basis sind und Klingeneinheitsbereiche definieren, in denen die Klingeneinheiten aufgenommen werden.

22. Kombination nach Anspruch 21, wobei die Kassettenteiler ferner winkelige Teiler (42) umfassen, die sich von den Enden von jeweiligen Klingeneinheitsteilern bei spitzen Winkeln bezüglich der Basis erstrecken und winkelige Bereiche definieren, durch die die Klingeneinheiten bei der Zuführung zu und Entfernung von den Klingeneinheitsbereichen passieren und in denen die Kassettenverbindungsstruktur aufgenommen wird.

23. Kombination nach Anspruch 22, wobei ein winkeliger Bereich eines Abschnitts teilweise über einem Klingeneinheitsbereich eines angrenzenden Abschnitts liegt.

24. Kombination nach Anspruch 1, wobei der Spender Ableitungslöcher (53) in Verbindung mit jeweiligen Abschnitten aufweist.

25. Kombination nach Anspruch 1, ferner umfassend erhöhte Elemente (38), auf denen Endstrukturen (40) der Kassette getragen werden, um einen Kontakt der Klingen mit dem Spender zu vermeiden.

26. Kombination nach Anspruch 1, ferner umfassend ein stabilisierendes Merkmal (134), angeordnet auf einer Oberkante (132) von zumindest manchen der Kassettenteiler, das konstruiert ist, den Kassettenverbindungsabschnitt einzugreifen und eine Bewegung des Kassettenverbindungsabschnitts innerhalb einer oberen Öffnung des korrespondierenden Abschnitts zu beschränken.

27. Kombination nach Anspruch 26, ferner umfassend ein Merkmal (138), angeordnet auf der Oberkante, das konstruiert ist, einen Kontakt zwischen dem stabilisierenden Merkmal und einer Hinterkante (110) der Kassette zu verhindern.

28. Kombination nach Anspruch 27, wobei die Kassette eine Trimmklinge (504), montiert entlang der Hinterkante der Kassette, umfasst.

29. Kombination nach Anspruch 26, wobei die Oberkante mit einem Radius versehen ist, um einen Kontakt zwischen dem stabilisierenden Merkmal und einer Hinterkante der Kassette zu verhindern.

30. Kombination nach Anspruch 25, wobei jedes der erhöhten Elemente eine konkave Oberkante aufweist.

31. Kombination nach Anspruch 30, wobei ein oberer Abschnitt der konkaven Oberkante von jedem erhöhten Element angrenzend an einen unteren Abschnitt einer konvexen Oberfläche von einem Korrespondierenden der Patronenteiler ist.

32. Kombination nach Anspruch 1, wobei die Breite (WB) der Klingeneinheit von etwa 1 bis 2 % größer als die Breite (WD) des Spenders ist.

33. Kombination nach Anspruch 1, wobei die Breite (WB) der Klingeneinheit vorzugsweise von etwa 0,2 bis 0,8 mm größer als die Breite (WD) des Spenders ist.

34. Verfahren der Verwendung einer auswechselbaren Rasiererkassette (12), umfassend: Aufbewahren einer Kassette in einem Spender (10), umfassend eine Gehäusestruktur (18), umfassend eine Basis (28) und winkelige Kassettenteiler (24), die Abschnitte (20) zum Aufnehmen von jeweiligen Kassetten und Halten der Kassetten in vorbestimmten Positionen definieren, wobei jeder Abschnitt einen Schnappriegel (22) umfasst, der geformt und positioniert ist, um mit einem korrespondierenden elastischen Merkmal (108) auf der Klingeneinheit der Kassette wechselzuwirken, wobei jeder Schnappriegel ausreichend starr ist, um einer Bewegung während einer Entfernung einer Kassette vom Spender zu widerstehen; Bewegen einer Griffverbindungsstruktur (64) eines Griffs (63) in Richtung der Kassettenverbindungsstruktur (16) der Kassette, um die Kassette mit dem Griff zu verbinden; und Entfernen der Kassette vom Spender, während sie mit dem Griff verbunden ist, durch Zurückziehen des Griffs vom Spender.

35. Verfahren nach Anspruch 34, ferner umfassend, nach der Verwendung des Rasierers, Wiedereinsetzen der Kassette in denselben oder einen anderen Spender durch Bewegen des Griffs und der verbundenen Kassette in den Spender, Lösen der Kassette vom Griff und Zurückziehen des Griffs, während die Kassette im Spender bleibt.

36. Verfahren nach einem der Ansprüche 34 bis 35, wobei die Griffverbindungsstruktur und Kassettenverbindungsstruktur korrespondierende asymmetrische Merkmale umfassen, die einander stören, wenn der Griff in einer ungeeigneten Orientierung ist, und die zusammenpassen, wenn der Griff in einer geeigneten Orientierung ist.

## Revendications

1. Ensemble comprenant : un distributeur de cartouches (10) comprenant une structure de boîtier (18) comportant une embase (28) et des séparateurs (24) qui définissent des sections (20) destinées à recevoir des cartouches respectives et à retenir les cartouches dans des positions prédéterminées, chaque section comportant un verrou (22) qui maintient de manière amovible une cartouche respective dans une position verrouillée dans la section ; et une cartouche de lame de rasoir remplaçable (12) comprenant une unité formant lame (14) et une structure de connexion de cartouche (16) permettant de connecter l'unité formant lame à une poignée (63) en déplaçant la poignée vers la structure de connexion de cartouche, **caractérisé en ce que** l'unité formant lame comprend un logement allongé (100) comportant une partie de verrouillage élastique (108) destinée à se mettre en prise avec le verrou du distributeur de cartouches.

2. Ensemble selon la revendication 1, dans lequel la partie de verrouillage élastique comprend un élastomère.

3. Ensemble selon la revendication 2, dans lequel la partie de verrouillage élastique comprend en outre une partie surélevée (109) de la structure de logement disposée sous l'élastomère.

4. Ensemble selon la revendication 1, dans lequel le verrou est suffisamment rigide pour résister à un mouvement pendant que la cartouche est extraite du distributeur.

5. Ensemble selon la revendication 1, dans lequel chaque section comprend une paire de verrous.

6. Ensemble selon la revendication 5, dans lequel les verrous sont positionnés sur des surfaces internes (21) de parois latérales opposées (26) du boîtier.

7. Ensemble selon la revendication 1, dans lequel le verrou comprend une saillie de verrouillage (200) formée pour interagir avec la partie de verrouillage élastique, qui comprend une saillie correspondante sur l'unité formant lame.

8. Ensemble selon la revendication 5 ou 6, dans lequel chaque verrou comprend une saillie de verrouillage (200) formée pour interagir avec la partie de verrouillage élastique, qui comprend une saillie correspondante sur l'unité formant lame.

9. Ensemble selon la revendication 7, dans lequel la saillie de verrouillage est positionnée pour retenir l'unité formant lame dans la section par un ajustement serré avec la saillie de l'unité formant lame.

10. Ensemble selon la revendication 8, dans lequel chaque saillie de verrouillage est positionnée pour retenir l'unité formant lame dans la section par un ajustement serré avec la saillie correspondante de l'unité formant lame.

11. Ensemble selon la revendication 7, dans lequel la saillie de verrouillage comprend une arête allongée.

12. Ensemble selon la revendication 7 ou 11, dans lequel la saillie de verrouillage comprend une encoche (202).

13. Ensemble selon les revendications 7 ou 11, dans lequel la saillie de verrouillage comprend une première surface (203, 205) positionnée pour empêcher un mouvement vertical de la saillie de l'unité formant lame et une seconde surface (204) positionnée pour empêcher un mouvement horizontal de la saillie de l'unité formant lame.

14. Ensemble selon la revendication 11, dans lequel l'arête comprend une surface inclinée allongée configurée pour faciliter l'insertion d'une unité formant lame dans la section respective.

15. Ensemble selon la revendication 11, dans lequel l'arête s'étend verticalement le long d'une paroi latérale interne du distributeur et est fixée à celle-ci.

16. Ensemble selon la revendication 8, dans lequel chaque saillie de verrouillage comprend une arête allongée.

17. Ensemble selon la revendication 8 ou 16, dans lequel chaque saillie de verrouillage comprend une encoche.

18. Ensemble selon les revendications 8 ou 16, dans lequel chaque saillie de verrouillage comprend une première surface positionnée pour empêcher un mouvement vertical de la saillie respective de l'unité formant lame et une seconde surface positionnée pour empêcher un mouvement horizontal de la saillie respective de l'unité formant lame.

19. Ensemble selon la revendication 16, dans lequel chaque arête comprend une surface inclinée allongée configurée pour faciliter l'insertion d'une unité formant lame dans la section respective.

20. Ensemble selon la revendication 16, dans lequel les arêtes s'étendent verticalement le long de parois latérales internes du distributeur et sont fixées à celles-ci.

21. Ensemble selon la revendication 1, dans lequel les séparateurs de cartouches (36) comprennent des séparateurs d'unités formant lame qui s'étendent à partir de l'embase, sont généralement perpendiculaires à l'embase et définissent des régions d'unités formant lame dans lesquelles les unités formant lame sont reçues.

22. Ensemble selon la revendication 21, dans lequel les séparateurs de cartouches comprennent en outre des séparateurs inclinés (42) qui s'étendent à partir des extrémités des séparateurs d'unités formant lame respectifs en formant des angles aigus avec l'embase et définissent des régions inclinées à travers lesquelles les unités formant lame passent lorsqu'elles sont déposées dans les régions d'unités formant lame ou extraites de celles-ci et dans lesquelles la structure de connexion de cartouche est reçue.

23. Ensemble selon la revendication 22, dans lequel une région inclinée d'une section recouvre partiellement une région d'unité formant lame d'une section adjacente.

24. Ensemble selon la revendication 1, dans lequel le distributeur comporte des orifices de vidange (53) associés aux sections respectives.

25. Ensemble selon la revendication 1, comprenant en outre des éléments surélevés (38) sur lesquels reposent des structures d'extrémité (40) de la cartouche de manière à éviter un contact des lames avec le distributeur.

26. Ensemble selon la revendication 1, comprenant en outre un élément stabilisateur (134), disposé sur un bord supérieur (132) d'au moins certains desdits séparateurs de cartouches, conçu pour se mettre en prise avec la partie de connexion de cartouche et limiter un mouvement de la partie de connexion de cartouche à l'intérieur d'une ouverture supérieure de la section correspondante.

27. Ensemble selon la revendication 26, comprenant en outre un élément (138), disposé sur ledit bord supérieur, conçu pour empêcher un contact entre l'élément stabilisateur et un bord arrière (110) de la cartouche.

28. Ensemble selon la revendication 27, dans lequel la cartouche comprend une lame de rasage (504) montée le long du bord arrière de la cartouche.

29. Ensemble selon la revendication 26, dans lequel ledit bord supérieur est arrondi pour empêcher un contact entre l'élément stabilisateur et un bord arrière de la cartouche.

30. Ensemble selon la revendication 25, dans lequel chacun des éléments surélevés présente un bord supérieur concave.

31. Ensemble selon la revendication 30, dans lequel une partie supérieure du bord supérieur concave de chaque élément surélevé est adjacente à une partie inférieure d'une surface convexe du séparateur de cartouches correspondant.

32. Ensemble selon la revendication 1, dans lequel la largeur (WB) de l'unité formant lame est supérieure d'environ 1 à 2% à la largeur (WD) du distributeur.

33. Ensemble selon la revendication 1, dans lequel la largeur (WB) de l'unité formant lame est de préférence supérieure d'environ 0,2 à 0,8 mm à la largeur (WD) du distributeur.

34. Procédé d'utilisation d'une cartouche de lame de rasoir remplaçable (12), comprenant les étapes consistant à : conserver une cartouche dans un distributeur (10) comprenant une structure de boîtier (18) comportant une embase (28) et des séparateurs de cartouches inclinés (24) qui définissent des sections (20) destinées à recevoir des cartouches respectives et à retenir les cartouches dans des positions prédéterminées, chaque section comportant un verrou (22) formé et positionné pour interagir avec un élément élastique correspondant (108) de l'unité formant lame de la cartouche, chaque verrou étant suffisamment rigide pour résister à un mouvement pendant que la cartouche est extraite du distributeur ; déplacer une structure de connexion de poignée (64) d'une poignée (63) vers une structure de connexion de cartouche (16) de la cartouche pour connecter la cartouche à la poignée ; et extraire la cartouche du distributeur pendant qu'elle est connectée à la poignée en retirant la poignée du distributeur.

35. Procédé selon la revendication 34, comprenant en outre les étapes consistant, après avoir utilisé le rasoir, à replacer la cartouche dans le même distributeur ou dans un autre en introduisant la poignée et la cartouche connectée à celle-ci dans le distributeur, en séparant la cartouche de la poignée et en retirant la poignée pendant que la cartouche reste dans le distributeur.

36. Procédé selon l'une quelconque des revendications 34 à 35, dans lequel la structure de connexion de poignée et la structure de connexion de cartouche comprennent des éléments asymétriques correspondants qui vont se gêner mutuellement lorsque la poignée est orientée incorrectement et vont s'apparier lorsque la poignée est orientée correctement.
